# EUROPÄISCHE PATENTSCHRIFT

(11) **EP 3 687 744 B1**
(45) Veröffentlichungstag und Bekanntmachung des Hinweises auf die Patenterteilung: **08.09.2021**
(21) Anmeldenummer: 18807203.7
(22) Anmeldetag: 13.11.2018
(51) Int. Cl.: B25J 9/16, B29C 45/76, B29C 45/17, B29C 45/42, B29C 45/14, B29C 31/00

(54) **VERFAHREN ZUM ANORDNEN VON HALBZEUGEN**
METHOD FOR ARRANGING SEMIFINISHED PRODUCTS
DISPOSITIF D'AGENCEMENT DE DEMI-PRODUITS

(30) Priorität: 14.11.2017 AT 509542017
(43) Veröffentlichungstag der Anmeldung: 05.08.2020
(73) Patentinhaber: ENGEL AUSTRIA GmbH, 4311 Schwertberg (AT)
(72) Erfinder: ZWICKLHUBER, Paul, 4550 Kremsmünster (AT); NEIBERGER, Alexander, 4331 Naarn im Machland (AT)
(74) Vertreter: Torggler & Hofinger Patentanwälte
(86) Internationale Anmeldenummer: PCT/AT2018/060269
(87) Internationale Veröffentlichungsnummer: WO 2019/094998

(56) Entgegenhaltungen:
- EP-A1- 3 093 130
- DE-A1-102015 000 618
- DE-A1-102015 201 551
- DE-A1-102016 011 903
- US-A1- 2009 199 948
- US-A1- 2012 330 453

## Beschreibung

Die vorliegende Erfindung betrifft ein Verfahren sowie eine Vorrichtung zum Anordnen von Halbzeugen, insbesondere thermoplastischen Halbzeugen. Weiters betrifft die Erfindung ein Formgebungsverfahren zum Herstellen eines Formteils in einer Formgebungsanlage sowie eine Formgebungsanlage zum Herstellen eines Formteils, mit einer Formgebungsmaschine, insbesondere einer Spritzgießmaschine.

Die Formgebungstechnik wird immer öfter dafür eingesetzt, um Formteile herzustellen, die die Anforderungen für den Leichtbau erfüllen. Solche für den Leichtbau geeignete Formgebungsanlagen werden daher immer öfter in der Fahrzeugherstellung verwendet. Um Leichtbau betreiben zu können, werden immer öfter Formteile in Form von faserverstärkten Kunststoffen, insbesondere unidirektional faserverstärkte Kunststoffe (Tapes), eingesetzt. Als Verstärkungsfasern werden hierbei hauptsächlich Glasfasern und Kohlefasern eingesetzt, welche in einer duroplastischen oder thermoplastischen Matrix eingebunden werden. Somit besitzen Tapes in Faserrichtung die mechanischen Eigenschaften der Faser und quer zur Faser die mechanischen Eigenschaften der Matrix, welche deutlich unterhalb der mechanischen Eigenschaften der Verstärkungsfaser liegt. Berücksichtigt man diese Tatsache, so ist es möglich, einen Werkstoff maßzuschneidern, indem man die Faserorientierungen an die geforderten mechanischen Anforderungen anpasst.

In den Dokumenten WO 2009/042225 A1 und WO 2013/016487 A1 wird jeweils eine Lösung zur Halbzeugproduktion angegeben. Als Ausgangsstoff dient ein faserverstärktes Halbzeug, welches von einer Spule abgewickelt, abgelängt und definiert auf einer Werkzeugoberfläche abgelegt wird. Beim Ablegen der Tapes auf der Werkzeugoberfläche werden die Tapes fixiert und anschließend verschweißt. Dabei können unterschiedlichste Faserwinkel realisiert werden, da sich die Werkzeugoberfläche um die Z-Achse rotieren lässt. Somit lassen sich mit diesem Prozess maßgeschneiderte Halbzeuge herstellen, bei denen sowohl Dickensprünge als auch unterschiedlichste Faserwinkel möglich sind.

In dem Dokument AT 514721 B1 wird ein Verfahren beschrieben, welches nach dem Pick-and-Place-Verfahren arbeitet. Dabei werden Tapes aus einem Lager mit einem Handling entnommen, die Lage des Tapes wird optisch kontrolliert und die Position/Lage kann online während der Ablage korrigiert werden. Dabei ist in einem Steuerprogramm die Ablageposition hinterlegt und die Ablageposition kann aufgrund der Positionsdaten aus der Bildverarbeitung angepasst werden. Unter anderem geht es in dieser Erfindung darum, die Ablage wesentlich zu verbessern, indem die Ablagedaten mittels einer intelligenten Regelung angepasst werden.

Weiters ist aus der nicht vorveröffentlichten österreichischen Patentanmeldung mit der Anmeldenummer A50866/2016 ein Handhabungsgerät für Einlegeteile mit einem Bewegungsapparat und einem Übernahmekopf bekannt. Darin geht es vor allem um eine Beleuchtungsvorrichtung zum Beleuchten eines aufgenommenen Einlegeteils von einer dem Übernahmekopf zugewandten Seite. Dadurch wird eine Positionierung der Einlegeteile mit einer höheren Genauigkeit erreicht.

Beim bekannten Stand der Technik wird zwar ein relativ genaues Positionieren ermöglicht, dennoch kann es zu Problemen kommen, wenn die einzelnen Halbzeuge von einer optimalen Form abweichen. So kann es vor allem beim Herstellen von Formteilen aus mehreren nebeneinander abgelegten Halbzeugen vorkommen, dass sich einzelne Halbzeuge zumindest bereichsweise überlappen oder dass der Abstand zwischen einzelnen Halbzeugen zumindest bereichsweise zu groß ist. Dadurch kann die mechanische Stabilität des so hergestellten Formteils massiv eingeschränkt werden.

Es ist vorgesehen, ein Verfahren und eine Vorrichtung bereitzustellen, wobei auch von einer idealen Form abweichende Halbzeuge mit erhöhter Genauigkeit, d.h. mit möglichst wenigen bzw. geringen Überlappen und Spalten zu einem nächsten Halbzeug, positioniert werden können.

Dies geschieht unter Verwendung einer elektronisch gesteuerten oder geregelten Ablegevorrichtung für die Halbzeuge, mit den Verfahrensschritten Erfassen zumindest eines Teils eines Umrisses eines abzulegenden Halbzeugs, vorzugsweise von einer Erfassungsvorrichtung, Bestimmen einer Soll-Position für das Halbzeug und/oder für die Ablegevorrichtung (insbesondere für eine Handlingvorrichtung der Ablegevorrichtung) des Halbzeugs unter Abgleich des zumindest einen Teils des Umrisses mit einer an einem Untergrund auftretenden Legekante und Ablegen des Halbzeugs durch die Ablegevorrichtung unter Verwendung der Soll-Position.

Hinsichtlich der Vorrichtung geschieht dies dadurch, dass die Steuer- oder Regeleinheit dazu ausgebildet ist, eine Soll-Position für das Halbzeug und/oder für die Ablegevorrichtung auf Basis des erfassten Umrisses bzw. unter Abgleich des zumindest einen Teils des Umrisses mit einer an einem Untergrund auftretenden Legekante zu bestimmen und beim Regeln oder Steuern der Ablegevorrichtung zu verwenden.

Derartige Verfahren und derartige Vorrichtungen sind aus der EP 3 093 130 A1 und der US 2012/0330453 A1 bekannt, wobei es hier jeweils um das Ablegen von Prepregs bzw. Verstärkungselementen bei der Herstellung von Flugzeugteilen.

In der DE 10 2015 201 551 A1 geht es im Speziellen um eine Erkennungsvorrichtung für die Erkennung einer Ausrichtung von Halbzeugzuschnitten für die Herstellung von Verbundbauteilen. Sensorhilfsmittel sind innerhalb der Fördervorrichtung angeordnet und beleuchten damit den Halbzeugzuschnitt von unten mit Licht. Das Fördermittel ist zumindest teilweise transluzent ausgebildet, sodass ein Durchleuchten der Förderfläche zu einer verbesserten Ausrichtungserkennung führt.

Gemäß der US 2009/0199948 A1 erfolgt eine Kompensation von entstandenen Lücken, wozu ein optischer Scanner eingesetzt wird. Im Speziellen soll ein korrekt angeordnetes Layup erreicht werden, wozu das falsch angeordnete Layup entsprechend korrigiert werden soll.

Die Aufgabe der vorliegenden Erfindung besteht daher darin, ein verbessertes Verfahren und eine verbesserte Vorrichtung bereitzustellen. Insbesondere sollen die Bauteilabmessungen (Umriss) bzw. die Lage eines Halbzeugs optisch optimal bestimmt werden können.

Dies wird durch ein Verfahren mit den Merkmalen von Anspruch 1 und durch eine Vorrichtung mit den Merkmalen von Anspruch 11 gelöst. Demnach ist erfindungsgemäß vorgesehen, dass die Erfassungsvorrichtung ein optisches Messsystem aufweist, wobei das Halbzeug bei der Erfassung zumindest eines Teils des Umrisses gegen eine Erfassungsoberfläche der Erfassungsvorrichtung gedrückt wird, wobei die Erfassungsoberfläche in Form einer für das optische Messsystem zumindest teilweise transparenten Platte ausgebildet ist.

Die Halbzeuge werden auf einem Untergrund abgelegt. Der Untergrund kann beispielsweise von einem Ablagetisch oder von bereits zuvor abgelegten Halbzeugen gebildet sein. Die Legekanten entstehen dabei entweder als Kanten bzw. Ränder von bereits abgelegten Halbzeugen oder durch sonstige am Untergrund vorhandene Strukturen, wie z. B. Anschläge oder dergleichen. Der Abgleich kann unter Minimierung von Spalten zwischen den Halbzeugen geschehen oder es kann ein definiertes Spalt- oder Überlappungsmaß vorgesehen sein.

Durch die erfindungsgemäße Lösung können sich die Außenabmessungen des zu legenden Halbzeugs verändern und es kann dennoch sichergestellt werden, dass die Halbzeuge nicht überlappen bzw. Spalten aufweisen, welche sich negativ auf die mechanischen Eigenschaften auswirken.

Sämtliche für das Verfahren beschriebene bevorzugte Ausführungsformen (mitsamt den jeweiligen Vorteilen) gelten in analoger Weise auch für die Vorrichtung - und umgekehrt.

Die Soll-Position für das Halbzeug bzw. die Ablegevorrichtung kann sowohl Positions- als auch Winkelparameter beinhalten, die vorzugsweise die gewünschte Position des abgelegten Halbzeugs oder alternativ die Position der Ablegevorrichtung in einer ablegenden Position - vorzugsweise vollständig - bestimmen.

Gemäß der Erfindung ist vorgesehen, dass das Anordnen bzw. Ablegen des zumindest einen Halbzeugs beispielsweise auf einem Ablagetisch abhängig von der Soll-Position durchgeführt wird. Diese Soll-Position kann für jedes Halbzeug separat festgelegt werden. Bei (von Zyklus zu Zyklus) individuell gestalteten Formteilen kann die Soll-Position jedes abzulegenden Halbzeugs auch abhängig von einem bereits vorher (und benachbart) abgelegten Halbzeugs in jedem Zyklus von neuem festgelegt werden. Dabei kann dann für jedes Halbzeug der erfasste Umriss und gegebenenfalls die erfasste Position/Ausrichtung (und gegebenenfalls auch die Orientierung der Verstärkungsfasern) zumindest eines vorher abgelegten Halbzeugs und des gerade abzulegenden Halbzeugs berücksichtigt werden.

Durch die Erfindung wird es möglich Halbzeuge relativ zueinander mit höherer Genauigkeit abzulegen. Dies resultiert in fehlerfreieren Halbzeuggelegen und - falls das Halbzueggelege in einem nachgeschalteten Formgebungsprozess verwendet wird - in Formteilen mit verbesserten mechanischen Eigenschaften. Es wurde bereits erwähnt, dass unidirektional faserverstärkte Halbzeuge als Tapes bezeichnet werden. Werden diese bei einem erfindungsgemäßen Verfahren eingesetzt, spricht man vom "Tapelegen".

Bevorzugte Ausführungsbeispiele der vorliegenden Erfindung sind in den abhängigen Ansprüchen angeführt.

Die Erfassungsvorrichtung ist erfindungsgemäß als optisches Messsystem, bevorzugt als Kamera, ausgebildet. Für die Überwachung der Position können aber auch andere Sensor-Systeme (Druck, Kapazität, Induktion, Widerstand, Ultraschall, Radar) verwendet werden.

Generell kann das Halbzeug jede beliebige Form aufweisen, die geeignet ist, um später in einem Formgebungsverfahren verwendet zu werden. Bevorzugt ist vorgesehen, dass das Halbzeug flächig ausgebildet ist. Im Speziellen weist das Halbzeug eine Oberseite, eine Unterseite und seitliche Kanten auf. Flächig heißt in diesem Fall, dass das Halbzeug plattenförmig ausgebildet ist. Ein flächiges Halbzeug kann dadurch definiert werden, dass die Dicke/Höhe des Halbzeugs maximal 10 %, vorzugsweise maximal 5%, besonders bevorzugt maximal 3 %, der Länge und/oder der Breite des Halbzeugs beträgt. Wenn Halbzeuge in Form von sogenannten Tapes verwendet werden, weisen diese oftmals eine standardisierte Länge von 80 mm, 160 mm, 320 mm usw. auf.

Der Umriss eines Objektes sind die äußeren Ränder oder Linien, die die Form eines Objektes für einen Betrachter bestimmen. Der Umriss eines Objektes hängt also nicht nur von der Form des Objektes ab, sondern auch von der Richtung, aus der ein Betrachter das Objekt beobachtet. Andere Bezeichnungen des Umrisses sind Kontur oder Silhouette.

Bevorzugt ist vorgesehen, dass das Erfassen zumindest eines Teils des Umrisses des Halbzeugs aus einer im Wesentlichen rechtwinkelig zur Oberseite oder zur Unterseite ausgerichteten Erfassungs-Blickrichtung erfolgt. Dadurch bilden die seitlichen Kanten - welche in der Regel die Legekanten bilden - den Umriss des Halbzeugs. Mit anderen Worten formuliert, soll die Beobachtungsachse der Kamera normal zum aufzunehmenden Objekt, d.h. der Oberseite oder Unterseite des Halbzeugs, stehen.

Prinzipiell ist es möglich, dass das Erfassen des Umrisses des Halbzeugs bereits direkt nach der Halbzeugherstellung oder in einem Magazin durchgeführt wird. Das heißt, die Analyse des Umrisses des Halbzeugs kann örtlich und/oder zeitlich getrennt von einem späteren Formgebungsverfahren erfolgen. Es kann somit beispielsweise bereits in einem Magazin (Halbzeug-Lager), in welchem die Halbzeuge abgelegt sind bzw. abgelegt werden, eine Vorsortierung durch die Erfassungsvorrichtung und anschließendem Vergleichen durchgeführt werden. Dabei können die Umrisse bzw. Teilumrisse sämtlicher analysierter Halbzeuge entsprechend gespeichert werden. Bevorzugt ist vorgesehen, dass das Erfassen und Vergleichen örtlich und/oder zeitlich dem anschließend durchgeführten Formgebungsverfahren direkt vorgelagert ist. Besonders bevorzugt ist deshalb vorgesehen, dass das Halbzeug vor dem Erfassen und dem Vergleichen von der Ablegevorrichtung aufgenommen wird und zur Erfassungsvorrichtung gebracht wird. Für eine einfache und zeitsparende Vorgehensweise kann vorgesehen sein, dass das Erfassen zumindest eines Teils des Umrisses des Halbzeugs zu einem Zeitpunkt erfolgt, zu dem das Halbzeug von der Ablegevorrichtung gehalten wird. Besonders bevorzugt kann hierzu eine Beleuchtungsvorrichtung zur Beleuchtung des zumindest einen aufgenommen Halbzeugs vorgesehen sein, wobei durch die Beleuchtungsvorrichtung das zumindest eine aufgenommene Halbzeug von einer einem Übernahmekopf der Handlingvorrichtung zugewandten Seite des zumindest einen aufgenommenen Halbzeugs (entspricht einem Einlegeteil) her beleuchtbar ist. Durch eine solche Beleuchtungsvorrichtung ist der Umriss des Halbzeugs besonders gut erfassbar, da die Abgrenzung gegenüber dem Hintergrund noch schärfer und detailreicher ist.

Bevorzugt ist vorgesehen, dass das Erfassen des zumindest einen Teils eines Umrisses eines abzulegenden Halbzeugs bei auf einer, vorzugsweise auf einem Kameratisch ausgebildeten, Erfassungsoberfläche aufliegendem, vorzugsweise bei auf die Erfassungsoberfläche (durch die Ablegevorrichtung) im Wesentlichen vollflächig angedrücktem, Halbzeug durchgeführt wird. Erfindungsgemäß ist vorgesehen, dass die Erfassungsoberfläche durch eine transparente Platte gebildet ist. Die transparente Platte kann beispielsweise aus Glas oder aus Plexiglas bestehen. Dadurch ist die Erfassungsoberfläche für das optische Messsystem transparent. Erfindungsgemäß weist die Erfassungsvorrichtung die als transparente Platte ausgebildete Erfassungsoberfläche und das, vorzugsweise unterhalb der transparenten Platte angeordnete, auf die Erfassungsoberfläche gerichtete optische Messsystem auf.

Weiters ist bevorzugt vorgesehen, dass die Ablegevorrichtung eine, vorzugsweise auf einem Ablagetisch ausgebildete, Ablageoberfläche für das Halbzeug aufweist. Auf diese Ablageoberfläche ist das Halbzeug von der Handlingvorrichtung der Ablegevorrichtung ablegbar. Auf dieser Ablageoberfläche werden dann mehrere Halbzeuge abgelegt und zusammengefügt. Die Ablageoberfläche bildet den Untergrund zum Ablegen des Halbzeugs. Ein auf der Ablageoberfläche abgelegtes Halbzeug bildet eine an dem Untergrund auftretende Legekante für ein nächstes abzulegendes Halbzeug.

Gemäß einem besonders bevorzugten Ausführungsbeispiel ist vorgesehen, dass die Erfassungsoberfläche der Erfassungsvorrichtung separat zur Ablageoberfläche der Ablegevorrichtung ausgebildet ist und beabstandet zur Ablageoberfläche angeordnet ist. Damit kann die Umrisserfassung örtlich (und zeitlich) getrennt vom (anschließenden) Ablegen des Halbzeugs auf der Ablageoberfläche des Ablagetischs durchgeführt werden.

Durch die Erfassungsvorrichtung kann aber nicht nur der Umriss des Halbzeugs erfasst werden, vielmehr ist bevorzugt vorgesehen, dass aus dem erfassten Umriss auch die Position und Ausrichtung des Halbzeugs bestimmt wird. Dies geschieht vorzugsweise relativ zu einem an der Ablegevorrichtung ausgebildeten Referenzmerkmal. Hierzu kann bevorzugt vorgesehen sein, dass durch eine Messung (insbesondere durch eine Kameraaufnahme) eine Relativposition zwischen (dem Übernahmekopf) der Handlingvorrichtung und dem zumindest einen aufgenommenen Halbzeug ermittelt wird, wobei die Relativposition bei der Steuerung oder Regelung des Ablegens des aufgenommenen Halbzeugs berücksichtigt wird.

Die so bestimmte Position bzw. die Ausrichtung kann vorzugsweise bei der Bestimmung der Soll-Position verwendet werden.

Es kann eine Beleuchtungsvorrichtung verwendet werden, bei der eine Spektralverteilung der ausgesendeten elektromagnetischen Strahlung an ein Absorptionsspektrum der Halbzeuge so angepasst wird, dass ein Kontrastverhältnis der von dem optischen Sensor erfassten Aufnahmen optimiert wird. Vereinfacht ausgedrückt kann die Farbe des zur Beleuchtung des Halbzeugs verwendeten Lichts so auf die Farbe des Halbzeugs angepasst werden, dass das Kontrastverhältnis optimiert wird.

Um ein mechanisch stabiles Formteil herzustellen ist es aber nicht nur wichtig, dass keine Überlappungen bzw. zu großen Abstände zwischen den eingelegten Halbzeugen gegeben sind, sondern dass auch die Anordnung und Orientierung der Verstärkungsfasern der nebeneinander angeordneten Halbzeuge nicht zu einer negativen mechanischen Beeinflussung im herzustellenden Formteil führt. Deswegen ist bevorzugt vorgesehen, dass von der Erfassungsvorrichtung der Verlauf (bzw. die Orientierung) der Verstärkungsfasern erfasst wird und bei von der Erfassungsvorrichtung erfassten zu großen Lücken zwischen den Verstärkungsfasern das Halbzeug aussortiert wird. Auch für diese Analyse kann eine bereits beschriebene Beleuchtungsvorrichtung eingesetzt werden. Um die besagten zu großen Lücken zu erfassen, kann auch für diese Analyse ein entsprechender Referenzbereich (z. B. in Form eines nicht zu überschreitenden, quer zur Längsausrichtung der Fasern gemessenen Maximalabstands zwischen einzelnen Fasern) hinterlegt sein. Enthält nämlich ein Halbzeug zumindest einen derartigen, zu großen Abstand, wird das Halbzeug aussortiert. Die Orientierung der Fasern kann besonders gut dann erkannt werden, wenn die Erfassungsvorrichtung eine Beleuchtungsvorrichtung aufweist, sodass ein besonders guter Kontrast zwischen den Fasern und dem die Fasern umgebenden Bereich gegeben ist. Bevorzugt liegt durch das Erfassen eine (zweidimensionale) Datenmenge vor, welche die Ausrichtung der einzelnen Fasern repräsentiert. Bei einem ein Gewebe aufweisenden Halbzeug ergibt sich im Normalfall somit ein Muster mit karierten Linien.

Es kann vorgesehen sein, dass das Halbzeug beim Ablegen mittels Unterdruck - vorzugsweise im Wesentlichen vollflächig - an eine, vorzugsweise eine Ablageoberfläche eines Ablagetisches bildende, Platte angesaugt wird.

Die bis hierhin beschriebenen Schritte können praktisch allesamt unabhängig von einem Formgebungsverfahren durchgeführt werden. Bevorzugt ist aber das erfindungsgemäß Verfahren zum Anordnen von Halbzeugen in einem Formgebungsverfahren, insbesondere Kunststoffformgebungsverfahren, zum Herstellen eines Formteils in einer Formgebungsanlage vorgeschaltet (gleich einem vorgeschalteten Sortierverfahren), wobei die Formgebungsanlage eine Formgebungsmaschine, insbesondere eine Spritzgießmaschine, und eine Ablegevorrichtung mit einer Handlingvorrichtung aufweist. Demnach umfasst dieses Formgebungsverfahren die folgenden Schritte:
- Durchführen eines erfindungsgemäßen Verfahrens zum Anordnen von Halbzeugen.
- Einbringen zumindest eines für die Verwendung bereitgestellten Halbzeugs in ein Formgebungswerkzeug einer Formgebungsmaschine.
- Schließen des Formgebungswerkzeugs, wodurch sich das zumindest eines Halbzeug in einer Kavität des Formgebungswerkzeugs befindet.
- Einbringen eines flüssigen Formgebungsmaterials, insbesondere einer Kunststoffschmelze, in die Kavität.
- Zumindest teilweises Aushärten bzw. Abkühlen des eingebrachten flüssigen Formgebungsmaterials mitsamt dem zumindest einen Halbzeug zum Formteil.
- Öffnen des Formgebungswerkzeugs.
- Entnehmen des Formteils aus dem Formgebungswerkzeug.

Bei diesen Formgebungsverfahren können als Formteile bevorzugt Faser-Kunststoff-Verbunde (FKV) bestehend aus Verstärkungsfasern und einer Kunststoffmatrix hergestellt werden, wobei die Verstärkungsfasern das Halbzeug (mit)bilden, während die Kunststoffmatrix das flüssige Formgebungsmaterial bildet. Faser-Kunststoff-Verbunde weisen in der Regel hohe spezifische Steifigkeiten und Festigkeiten auf. Dies macht sie zu geeigneten Werkstoffen in Leichtbauanwendungen. Aus Faser-Kunststoff-Verbunden werden überwiegend flächige Strukturen hergestellt.

Die Verstärkungsfasern - welche die Halbzeuge bzw. den wesentlichen Bestandteil der Halbzeuge bilden - können ausgewählt sein aus der Gruppe anorganische Verstärkungsfasern (z. B. Basaltfasern oder Glasfasern), metallische Verstärkungsfasern (z. B. Stahlfasern), organische Verstärkungsfasern (z. B. Aramidfasern, Kohlenstofffasern, Polyethlyen-Fasern), Naturfasern (z. B. Flachsfasern, Holzfasern) oder Mischungen daraus. Da die einzelnen Faserfilamente meist schwer zu handhaben sind, fasst man die trockenen Fasern zu Halbzeugen zusammen. Die Herstellverfahren entstammen in weiten Teilen der Textiltechnik wie zum Beispiel das Weben, Flechten oder Sticken. Als Halbzeuge können somit Gewebe, Gelege, Gesticke, Geflechte, Matten, Vliesstoffe oder Ähnliches verwendet werden. Als Halbzeuge können auch vorimprägnierte Halbzeuge wie beispielsweise Glasmattenverstärkte Thermoplaste, Langfaserverstärkte Thermoplaste, ein Sheet Molding Compound (SMC), ein Prepreg mit vorzugsweise unidirektional Endlosfasern, ein Bulk Molding Compound (BMC) oder Ähnliches verwendet werden.

Als Kunststoffmatrix kann eine thermoplastische Matrix (z. B. basierend auf Polyetheretherketon oder Polytetrafluorethen) oder eine duroplastische Matrix (z. B. basierend auf Epoxidharz, Polyesterharz, Polyurethan, Aminoharz) verwendet werden.

Unter Formgebungsmaschinen können Spritzgießmaschinen, Spritzpressen, Pressen und dergleichen verstanden werden. Unter Kunststoffformgebungsverfahren können Verfahren verstanden werden, bei denen z. B. thermoplastischem Kunststoff, reaktiven Komponenten, die zu Kunststoffen vernetzen, oder dergleichen in einem Formwerkzeug eine Form verliehen werden. Beim Weiterverarbeiten der aneinander angeordneten Halbzeuge können aber auch Umformschritte in der Formgebungsmaschine durchgeführt werden (Beispiel: in einer Spritzgießmaschine bzw. einem Spritzgießwerkzeug Umformen und Hinterspritzen).

Zwischen dem erfindungsgemäßen Anordnen der Halbzeuge und dem Formgebungsverfahren können weitere Verfahrensschritte stattfinden, wie z.B. punktuelles Verschweißen der angeordneten Halbzeuge (bspw. auf dem Ablagetisch), zumindest teilweises - vorzugsweise vollständiges - Konsolidieren der angeordneten Halbzeuge, Erwärmen der angeordneten Halbzeuge und dergleichen.

Vor dem erfindungsgemäßen Verfahren zum Anordnen der Halbzeuge können die Halbzeuge gestanzt werden und/oder in einem Magazin abgelegt werden. Es besteht aber auch die Möglichkeit, dass zumindest eine Halbzeug-Rolle in das Magazin eingebracht wird und dass das Halbzeug im Magazin durch Abrollen und Ablängen entsteht.

In einer bevorzugten Ausführungsform werden die Halbzeuge - vorzugsweise vor dem Einspritzen der Kunststoffmatrix - individuell auf Basis der genau erfassten Form des jeweiligen Halbzeugs abgelegt. Anders ausgedrückt werden die Halbzeuge dann in Form eines Puzzles zusammengefügt, wobei die Halbzeuge unter Vermeidung von Überlappungen oder Spalten zwischen den Halbzeugen abgelegt werden. D.h. es kann vorgesehen sein, dass die Soll-Position für das Halbzeug und/oder für die Ablegevorrichtung zum Ablegen des Halbzeugs so bestimmt wird, dass beim Ablegen des Halbzeugs Spalten zwischen dem Halbzeug und einem bereits davor abgelegten Halbzeug und/oder ein Überlappen zwischen dem Halbzeug und einem bereits davor abgelegten Halbzeug vermieden werden. Insbesondere können die Halbzeuge dadurch zueinander bündig abgelegt werden.

Prinzipiell ist es möglich, dass das Erfassen des Umrisses des Halbzeugs durch die Erfassungsvorrichtung erst beim Ablegen ins Formgebungswerkzeug bzw. auf dem Ablagetisch erfolgt. Generell ist es dadurch möglich, dass mehrere (oder sogar alle) im Formgebungswerkzeug bzw. auf dem Ablagetisch abgelegten Halbzeuge gleichzeitig hinsichtlich ihres jeweiligen Umrisses analysiert werden können. Dies hat den Vorteil, dass dadurch der Umriss gleich mit dem Umriss des benachbart abgelegten Halbzeugs verglichen werden kann. Nachteilig hierbei ist allerdings, dass das Aussortieren eines nicht den Kriterien entsprechenden Halbzeugs erst relativ spät im Formgebungsverfahren erfolgt, was zu einer Zykluszeitverlängerung führen kann.

Gemäß einem bevorzugten Ausführungsbeispiel weist die Ablegevorrichtung eine Handlingvorrichtung auf. Diese Handlingvorrichtung dient zum Handhaben, vorzugsweise zum Aufnehmen, Transportieren und Ablegen, des Halbzeugs. Zudem ist bevorzugt vorgesehen, dass die Ablegevorrichtung auch einen Ablagetisch aufweist.

Bevorzugt ist vorgesehen, dass durch die Erfassungsvorrichtung auch die Position und Ausrichtung des Halbzeugs relativ zu einem, vorzugsweise an der Ablegevorrichtung bzw. der Handlingvorrichtung ausgebildeten, Referenzmerkmal erfassbar ist. Das Referenzmerkmal kann punktförmig sein, aber auch jede andere geometrische Form aufweisen, mittels welcher relative Lagen von Umrissen, Positionen und Ausrichtungen vereinfacht festgestellt werden können. Anders ausgedrückt kann vorgesehen sein, dass aus dem erfassten Umriss eine Position und/oder eine Ausrichtung des Halbzeugs, vorzugsweise relativ zu einem an der Ablegevorrichtung ausgebildeten Referenzmerkmal, bestimmt werden/wird.

Weiters kann bevorzugt vorgesehen sein, dass aus der Position und/oder der Ausrichtung des Halbzeugs die Soll-Position für das Halbzeug und/oder für die Ablegevorrichtung bestimmt werden/wird.

Für die Daten, welche den Umriss-Referenzbereich definieren, kann ein eigener Speicher vorgesehen sein. Bevorzugt ist vorgesehen, dass der Umriss-Referenzbereich in einem Speicher der Steuer- oder Regeleinheit gespeichert ist. Alternativ kann der Umriss-Referenzbereich auch in einer Cloud gespeichert sein.

Die Erfassungsvorrichtung weist ein optisches Messsystem, insbesondere eine Kamera, auf. Dabei ist es, insbesondere unter Verwendung eines Referenzmerkmals bei den Aufnahmen, möglich, den Pixeln (vorzugsweise jedem einzelnen Pixel) ein Positionsdatum zuzuordnen. Dadurch ist es besonders einfach möglich die Umrisse, Positionen und/oder Ausrichtungen der Halbzeuge zu erfassen, weil für jedes Pixel, das in einer Aufnahme dem Halbzeug zugeordnet wird, das Positionsdatum bekannt ist.

Für ein gutes und sicheres Erfassen des Umrisses kann die Erfassungsvorrichtung auch eine Beleuchtungsvorrichtung aufweisen. Gemäß einem bevorzugten Ausführungsbeispiel kann vorgesehen sein, dass eine Beleuchtungsvorrichtung verwendet wird, bei der eine Spektralverteilung der ausgesendeten elektromagnetischen Strahlung an ein Absorptionsspektrum der Halbzeuge so angepasst wird, dass ein Kontrastverhältnis der von dem optischen Sensor erfassten Aufnahmen optimiert wird.

Es kann vorgesehen sein, dass ein Vergleich des erfassten Umrisses mit einem gespeicherten Umriss-Referenzbereich und/oder ein Vergleich eines aus dem erfassten Umriss bestimmten Maßes des Halbzeugs mit einem gespeicherten Referenzmaßbereich durchgeführt wird, wobei in Abhängigkeit eines Ergebnisses dieses Vergleichs entweder ein Aussortieren des Halbzeugs erfolgt, wenn der erfasste Umriss des Halbzeugs zumindest abschnittsweise außerhalb des Umriss-Referenzbereichs liegt bzw. das bestimmte Maß des Halbzeugs außerhalb des Referenzmaßbereichs liegt, oder das Halbzeug zum Verwenden in einem Formgebungsverfahren bereitgestellt wird, wenn der erfasste Umriss des Halbzeugs innerhalb des Umriss-Referenzbereichs liegt bzw. das bestimmte Maß des Halbzeugs innerhalb des Referenzmaßbereichs liegt.

Anders formuliert kann vorgesehen sein, dass die Steuer- oder Regeleinheit dazu ausgebildet ist, einen Vergleich des erfassten Umrisses mit einem gespeicherten Umriss-Referenzbereich und/oder einen Vergleich eines aus dem erfassten Umriss bestimmten Maßes des Halbzeugs mit einem gespeicherten Referenzmaßbereich durchzuführen und in Abhängigkeit eines Ergebnisses dieses Vergleichs entweder das Halbzeug mittels der Ablegevorrichtung in einen Aussortier-Bereich zu bewegen, wenn der erfasste Umriss des Halbzeugs zumindest abschnittsweise außerhalb des Umriss-Referenzbereichs liegt bzw. das bestimmte Maß des Halbzeugs außerhalb des Referenzmaßbereichs liegt, oder das Halbzeug mittels der Ablegevorrichtung in einen Bereitstellungs-Bereich zu bewegen, wenn der erfasste Umriss des Halbzeugs innerhalb des Umriss-Referenzbereichs liegt bzw. das bestimmte Maß des Halbzeugs innerhalb des Referenzmaßbereichs liegt. Dadurch können unpassende (bspw. ausgefranste oder verformte) Halbzeuge leicht ausgesondert werden. Entsprechende Ausführungen können besonders vorteilhaft mit Referenzbereich für die Halbzeuge eingesetzt werden. Schließlich wird auch noch Schutz für eine Formgebungsanlage zum Herstellen eines Formteils begehrt, wobei diese Formgebungsanlage eine Formgebungsmaschine, insbesondere einer Spritzgießmaschine oder Spritzpresse, und eine erfindungsgemäße Vorrichtung zum Anordnen von thermoplastischen Halbzeugen aufweist.

Die Formgebungsanlage kann eine an sich bekannte Anlagensteuerung aufweisen, mit welcher sämtliche, auf der Formgebungsanlage durchgeführten Prozesse zentral gesteuert werden. Je nachdem, welche Ausführungsform für die einzelne Konstruktion und die durchzuführenden Prozesse Vorteile aufweist, kann die Steuer- oder Regeleinheit der Vorrichtung zum Vorbereiten von Halbzeugen mit der Anlagensteuerung signaltechnisch verbunden sein oder direkt in die Anlagensteuerung integriert sein. Im zweiten Fall kann ein Ablaufprogramm eines entsprechenden (Halbzeugvorbereitungs-)Betriebsmodus im Speicher der Anlagensteuerung hinterlegt werden.

Die gesamte Erfindung inklusive bevorzugter Ausführungsvarianten können auch noch mit den folgenden Worten beschrieben werden.

Um die Ablagegenauigkeit von Halbzeugen zu erhöhen, ist eine Überwachung der Aufnahmeposition bzw. der Position des Halbzeugs am Übernahmehandling (Handlingvorrichtung) notwendig. Für die Überwachung der Position können entweder optische oder sensitive Systeme (Druck, Kapazität, Induktion, Widerstand, Ultraschall, Radar) verwendet werden.

Genau von diesen Systemen werden nun die Außenabmessungen des Halbzeugs (Umrisse) und zumindest ein Referenzmerkmal (auch als Referenzelement zu bezeichnen) erfasst. Diese Informationen werden anschließend in ein binäres Bild bzw. in Daten umgewandelt, welche es ermöglichen, die zweidimensionale Form (entspricht dem Umriss) und die Lage (entspricht der Position und der Ausrichtung) des Halbzeugs und des zumindest einen Referenzmerkmals zu bestimmen. Bei der Umwandlung der Aufnahme in ein binäres Bild, können den einzelnen Pixel Längenangaben zugewiesen werden und somit ist es möglich Längen bzw. Entfernungen zu bestimmen. Anhand dieser Information ist es möglich, Halbzeuge aufgrund ihrer tatsächlichen Länge dahingehend zu beurteilen, ob diese verwendet werden können oder ob sie aussortiert werden sollen.

Um bei der Umwandlung von einem Bild in ein binäres Bild eine ausgezeichnete Kantenschärfe zu bekommen, kann der Kontrast zwischen Halbzeug und Hintergrund wichtig sein. Im Binärbild wird der Umriss des Körpers per Grauwertunterschiede gesucht. Nur wenn der Kontrast sehr hoch ist, sind auch die Grauwertunterschiede dementsprechend groß und somit lassen sich Kanten bzw. der Umriss exakt bestimmen. Der Umriss im Binärbild besteht dann aus einer Vielzahl von Pixeln, die im Idealfall alle benachbart sind und eine beliebig (beispielsweise schräg) ausgerichtete Gerade ergeben. Im realen Fall kann es natürlich dazu kommen, dass die Pixel keine Gerade ergeben, sondern z.B. eine sinusähnliche Form aufweisen. In diesem Fall hat die Software der Bildverarbeitung viele Möglichkeiten damit umzugehen. Einige Beispiele seien angeführt (unvollständige Liste):
- Es können die beiden Eckpunkte einer Kante gesucht und dazwischen eine Gerade gelegt werden.
- Es können alle Täler und Spitzen betrachtet und ein Mittelwert gebildet werden.
- Die Gerade kann nur auf die Täler gelegt werden.
- Die Gerade kann nur auf die Spitzen gelegt werden.
- Es kann ein Polynom gebildet werden, welches die Gerade oder eine Kurve oder eine Spline beschreibt.

Sind Form und Lage bekannt, kann das Halbzeug exakt abgelegt werden. Dies ist bei der Herstellung eines mehrlagigen Halbzeug-Layups von enormer Bedeutung, denn die maximale Performance kann vor allem dann erreicht werden, wenn die einzelnen Halbzeuge optimal zueinander abgelegt werden. Um die besten mechanischen Eigenschaften zu erreichen, wird deswegen die Ablageposition intelligent angepasst. Das bedeutet, dass sowohl auf die Halbzeuggröße als auch auf den Verlauf der Verstärkungsfaser bei der Ablage Rücksicht genommen wird. Werden mehrere Halbzeuge abgelegt, welche denselben Faserverlauf besitzen, sind diese so abzulegen, dass sich zwischen den Halbzeugen vorzugsweise kein Spalt bzw. nur eine sehr geringe Überlappung der Halbzeuge befindet. Um das zu ermöglichen, sind sowohl Positionsinformationen bzw. Umrissinformationen vom zumindest letzten abgelegten Halbzeug als auch von dem abzulegenden Halbzeug vorhanden. Hierbei können verschiedene Ansätze verfolgt werden. Entweder befinden sich mehrere Messsysteme in der Halbzeuglegezelle (Ablagetisch), welche die Position des abgelegten Halbzeugs und des abzulegenden Halbzeugs bestimmen oder es wird nur mit einem Messsystem gearbeitet und die Position des zuletzt abgelegten Halbzeugs wird in einem Zwischenspeicher/Speicher gelagert. Somit ist es in weiterer Folge möglich, dass die Umrissdaten und Positionsdaten/Ausrichtungsdaten des abgelegten Halbzeugs mit den Umrissdaten und Positionsdaten/Ausrichtungsdaten des aufgenommenen Halbzeugs gemeinsam analysiert werden und dass das aufgenommene Halbzeug so abgelegt wird, dass sich möglichst kein Spalt zwischen den Halbzeugen befindet. Besonders bevorzugt werden bei der Ablage die Legekanten zueinander positioniert. Unter Legekanten sind jene Kanten gemeint, welche nach der der Ablage zueinander fluchten müssen.

Ein Spalt zwischen den Halbzeugen ist zu vermeiden, da sich die Spalten später kaum noch schließen lassen und somit Fehlstellen im Bauteil hinterlassen würden, welche die Bauteileigenschaften gravierend negativ beeinflussen können.

Um die besten mechanischen Eigenschaften zu erreichen, bietet die Bildverarbeitung bzw. sensitive Kantenerkennung weitere Vorteile, welche auch zum Einsatz kommen. Um die Qualität und somit auch die mechanischen Eigenschaften weiter zu steigern, können von den abzulegenden Geometrien Grenzmuster in der Steuerung/Regelung hinterlegt werden. Somit ist es der Steuerung bzw. der Rechnereinheit, welche das binäre Bild bzw. den Datensatz mit Positionsdaten erstellt, möglich, Halbzeuge mit fehlerhaften Geometrien auszuschleusen. Fehlerhafte Geometrien können beispielsweise maßlich zu weit von einer Soll-Geometrie abweichen, besonders kritisch können hierbei Winkelabweichungen der Legekanten bzw. die Geometrie der Legekanten sein. Ist die Legekante z.B. wellig anstatt linear, so kann das zu Problemen beim Ablegen führen. Somit ist es besser, wenn solche Halbzeugzuschnitte frühzeitig aussortiert werden.

Die Kontrolle der Halbzeuge mit optischen Messsystemen durchgeführt. Hier ist es zusätzlich möglich, dass nicht nur die Abmessungen, sondern auch die Qualität des Halbzeugs auf eine gleichmäßige Faseraufteilung überprüft wird. Sind die Fasern ungleichmäßig aufgeteilt, ergeben sich immer wieder Matrixgassen, welche sich auf die Mechanik negativ auswirken. Solche Matrixgassen lassen sich durch ein perfektes Zusammenspiel zwischen optischen Messsystem und Belichtungstechnik darstellen und somit können Halbzeuge mit zu großen oder zu vielen Matrixgassen aussortiert werden. Weiters kann auch die Faserorientierung im Halbzeug überprüft und überwacht werden.

Als Beleuchtungsvorrichtungen werden vorzugsweise Erregungsquellen eingesetzt, welche sichtbares Licht emittieren können. Besonders bevorzugt ist eine Beleuchtungsvorrichtung, deren ausgesendete Strahlung sich an die Farbe des Halbzeugs anpasst, um den Kontrast bei der Bildaufnahme zu maximieren. Dazu wird vor der Belichtung die Farbe des Halbzeugs bestimmt und an eine Steuerung/Regelung weitergegeben. Diese Steuerung/Regelung kann anschließend die Belichtung so anpassen, dass der Kontrast maximiert wird und somit die Kantenerkennung bzw. auch die Erkennung von Matrixgassen verbessert wird. Die Anpassung der Belichtung ist für hybride Bauteilstrukturen äußerst interessant, da unterschiedliche Faserhalbzeuge oft deutliche Farbunterschiede aufweisen. Die Halbzeuge können dabei sichtbares Licht gar nicht (weißer Körper), teilweise oder vollständig absorbieren (schwarzer Körper).

Um die Bauteilabmessungen (Umriss) bzw. die Lage eines Halbzeugs optisch optimal zu bestimmen, kann es wichtig sein, dass sich das Halbzeug in einer gestreckten Position befindet, damit die wahren Abmessungen gemessen werden können. Um das Halbzeug in eine gestreckte Lage zu bringen, ist erfindungsgemäß vorgesehen, dass das Halbzeug gegen eine für das optische Messsystem zumindest teilweise transparente Platte gedrückt und somit gestreckt wird. Damit diese transparente Platte nicht verschmutzt und somit Fehlinformation bei der Bildaufnahme sowie Bildauswertung entsteht, wird in einer bevorzugten Variante die transparente Platte nach jeder Bildaufnahme mit Druckluft gespült und von Staubpartikel, Fasern und allfälligen Artefakten befreit / gereinigt. Natürlich sind auch Kombinationen von verschiedenen Greifvorrichtungen vorstellbar, welche sich dazu eignen, ein Halbzeug zu strecken.

Zum Formgebungsverfahren kann noch folgendes in Bezug auf eine bevorzugtes Ausführungsbeispiel ausgeführt werden: Die Halbzeuge werden aus einem Lager/Magazin entnommen. Nach der Entnahme wird der Umriss bzw. die Position/Ausrichtung des Halbzeugs entweder direkt am Übernahmehandling oder an einer Zwischenposition bestimmt. Die Zwischenposition kann im einfachsten Fall das Magazin bzw. die Aufnahmeposition des Halbzeugs sein, kann sich aber auch außerhalb des Magazins befinden. Dies kann beispielsweise der Fall sein, wenn die Halbzeuge entweder durch den Übernahmegreifer oder eine externe Entnahmeeinheit aus dem Magazin entnommen werden und zu einer Zwischenposition/Aufnahmeposition transportiert werden. Ist die Position am Übernahmehandling bzw. an der Zwischenposition bekannt, kann die Ablageposition des Halbzeugs unter Berücksichtigung der wahren Abmessungen bzw. der Lage am Übernahmehandling abgelegt werden. Dieser Prozess wiederholt sich dann bis der Layup vollständig abgelegt bzw. aufgebaut ist. Die unterste Halbzeuglage bzw. untersten Halbzeuglagen werden dabei vorzugsweise von einer Unterdruckplatte in Position gehalten, alle weiteren Halbzeuglagen werden mittels eines Fügverfahrens mit dem darunterliegen Halbzeug verbunden.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: perspektivisch ein Halbzeug,
- Fig. 2: eine Draufsicht auf das Halbzeug, wodurch der Umriss erkennbar ist,
- Fig. 3: eine Draufsicht auf ein Halbzeug in Form eines Gewebes,
- Fig. 4: eine Draufsicht auf ein Formteil,
- Fig. 5: einen Schnitt durch ein Halbzeuggelege nach dem Stand der Technik mit ungewünschten Überlappungen,
- Fig. 6: einen Schnitt durch ein Halbzeuggelege nach dem Stand der Technik mit ungewünschten Spalten,
- Fig. 7: schematisch ein Vorrichtung 7 zum Bereitstellen von Halbzeugen für ein Formgebungsverfahren,
- Fig. 8: schematisch ein Halbzeug mit ungeeigneter Seitenkante in einer Draufsicht,
- Fig. 9: schematisch ein Halbzeug mit passender Seitenkante in einer Draufsicht,
- Fig. 10: schematisch eine Formgebungsanlage und
- Fig. 11: die Vorrichtung zu Vorbereiten von Halbzeugen mit Abholtisch, Kameratisch und Ablagetisch.

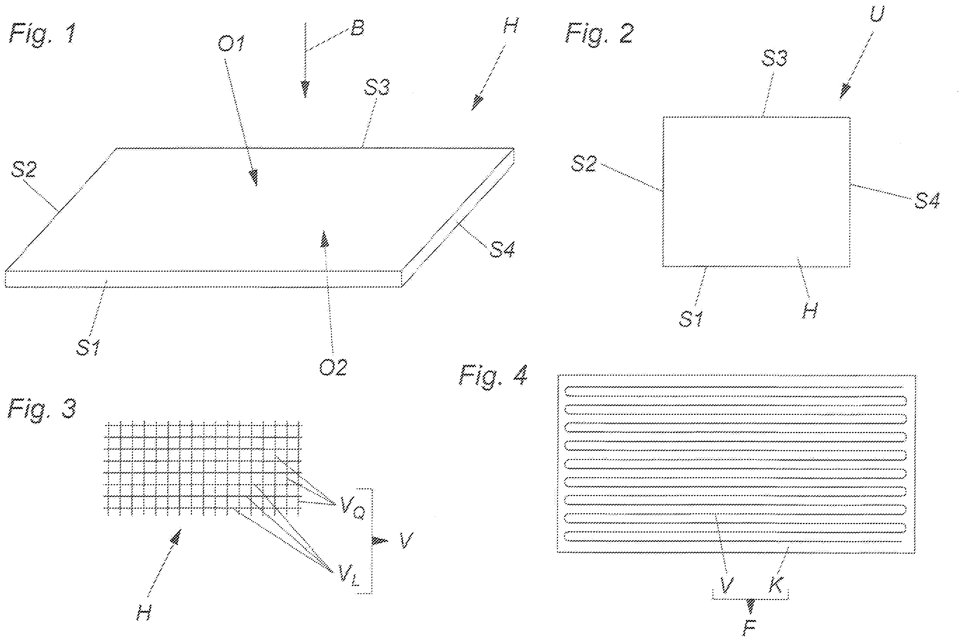

In Fig. 1 ist in einer perspektivischen Darstellung ein flächiges Halbzeug H dargestellt. Dieses Halbzeug H weist eine Oberseite O1 sowie eine Unterseite O2 auf. Umfänglich ist dieses Halbzeug H von den seitlichen Kanten S1, S2, S3 und S4 begrenzt.

Wenn man von oben (entspricht der Erfassungs-Blickrichtung B) auf dieses Halbzeug H blickt, so erkennt man einen Umriss U, wie er beispielsweise in Fig. 2 dargestellt ist. Dieser Umriss U des Halbzeugs H setzt sich aus den vier seitlichen Kanten S1 bis S4 zusammen.

In Fig. 3 ist eine Draufsicht auf ein flächig ausgebildetes Halbzeug H gezeigt. Dieses Halbzeug H ist in diesem Fall als Gewebe ausgebildet und besteht aus einer Vielzahl von Verstärkungsfasern V. Diese Verstärkungsfasern V sind in parallel zueinander ausgerichtete Längsfasern V_{L} und in rechtwinkelig zu diesen Längsfasern ausgerichtete Querfasern V_{Q} unterteilt. Natürlich können die einzelnen Verstärkungsfasern V auch in anderen Formen als in Fig. 3 dargestellt angeordnet sein. Die Verstärkungsfasern V können auch vorimprägniert sein.

In Fig. 4 ist ein in einem Formgebungsverfahren hergestelltes Formteil F dargestellt. Dieses setzt sich einerseits aus den Verstärkungsfasern V und andererseits aus dem zuerst flüssigen und dann ausgehärteten Formgebungsmaterial K zusammen. Im dargestellten Fall ist die Verstärkungsfaser V schlangenlinienförmig angeordnet. Ein solches Formteil F bildet einen Faser-Verbund-Kunststoff, der vor allem im Leichtbau eingesetzt wird.

Für die Herstellung von solchen Faser-Verbund-Kunststoffen wird aber meist nicht nur ein Halbzeug H verwendet, sondern es wird eine Vielzahl von Halbzeugen H in einer bestimmten Anordnung nebeneinander und/oder übereinander abgelegt, wonach diese Vielzahl von Halbzeugen H vom flüssigen Formgebungsmaterial K umspritzt wird. Dieses Anordnen von Halbzeugen H wird auch als Layup oder Halbzeuggelege bezeichnet.

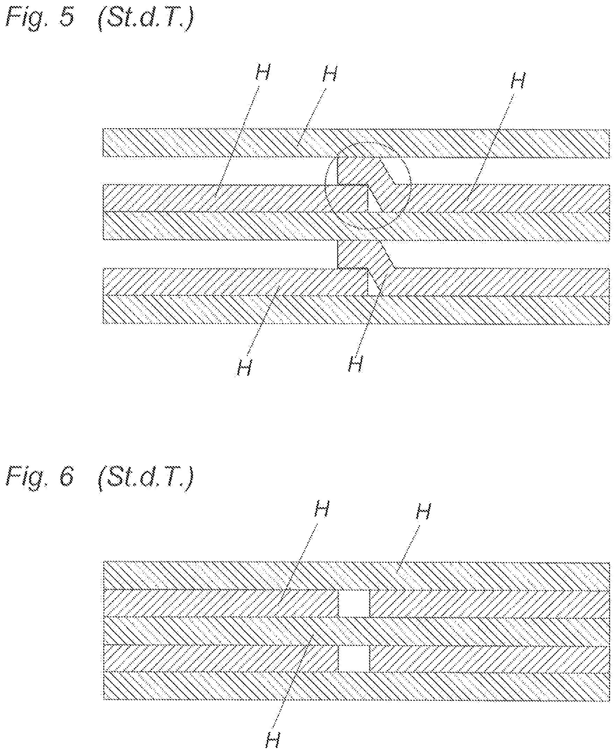

Wie in Fig. 5 dargestellt, kann es beim Ablegen von mehreren Halbzeugen H zu ungewünschten Überlappungen kommen (siehe eingekreister Bereich). Durch solche Überlappungen wird die Wandstärke des Halbzeuggeleges lokal um ein Vielfaches erhöht. Dies macht in weiterer Folge beim Konsolidieren der Halbzeuge H Probleme, da beim Konsolidieren die Überlappungen nicht berücksichtigt werden. Somit kommt es lokal zu massiven Druckerhöhungen, wodurch es beim Konsolidieren zu Faserschwimmen kommt, was sich wiederum negativ auf die mechanischen Eigenschaften des entstehenden Formteils F bzw. des dann daraus hergestellten Bauteils aufwirkt.

In Fig. 6 ist ein anderer negativer Fall dargestellt, der bisher beim Herstellen von Formteilen F aus Halbzeugen H auftreten konnte. In diesem Fall wurden die Halbzeuge H nicht Kante an Kante abgelegt, wodurch ein Spalt entsteht. Dieser füllt sich bestenfalls mit der Kunststoffmatrix oder es bleibt im Bauteil überhaupt eine Gasse, welche ohne Matrix bzw. Faser gefüllt ist. In beiden Fällen kann das mechanische Verhalten massiv eingeschränkt werden.

Um solche Fälle nun von vornherein möglichst auszuschließen, ist ein erfindungsgemäßes Verfahren bzw. eine erfindungsgemäße Vorrichtung 7 vorgesehen.

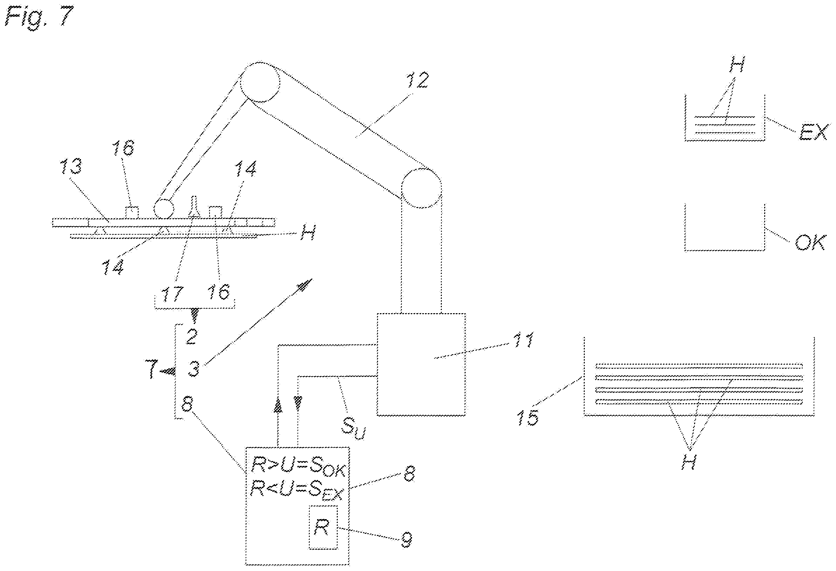

In Fig. 7 sind schematisch eine Erfassungsvorrichtung 2 und eine Steuer- oder Regeleinheit 8 dargestellt. Diese beiden Komponenten bilden zusammen - in diesem Fall mitsamt einer Ablegevorrichtung, welche eine Handlingvorrichtung 3 aufweist - die Vorrichtung 7 zum Anordnen von Halbzeugen H für ein Formgebungsverfahren. Die Handlingvorrichtung 3 weist einen Sockel 11, den am Sockel 11 bewegbar gelagerten Handlingarm 12 und den Übernahmekopf 13 auf. Am Übernahmekopf 13 sind Halteelemente 14 (z. B. in Form von Vakuumsaugern) ausgebildet, mit welchen ein Halbzeug H aus einem Halbzeugmagazin 15 aufgenommen werden kann. Am Übernahmekopf 13 sind zumindest eine Beleuchtungsvorrichtung 16 und ein Aufnahmegerät 17 in Form eines optischen Messsystems (vorzugsweise ein Kamerasystem) der Erfassungsvorrichtung 2 angeordnet. Über die Beleuchtungsvorrichtung 16 wird das Halbzeug H derart angestrahlt, dass vor allem der Umriss U des Halbzeugs H durch das Aufnahmegerät 17 visuell erfassbar sind. Die Erfassungsvorrichtung 2 steht mit der Steuer- oder Regeleinheit 8 in signaltechnischer Verbindung. In einem Speicher 9 der Steuer- oder Regeleinheit 8 ist ein, vorzugsweise von einem Bediener einstellbarer, Umriss-Referenzbereich R gespeichert. Vom Aufnahmegerät 17 der Erfassungsvorrichtung 2 wird ein den Umriss U repräsentierendes Signal S_{U} an die Steuer- oder Regeleinheit 8 übermittelt. In einer Vergleichseinheit der Steuer- oder Regeleinheit 8 wird der Umriss U mit dem Umriss-Referenzbereich R verglichen. Liegt der Umriss U zumindest bereichsweise außerhalb des Umriss-Referenzbereichs R, wird ein Signal S_{EX} zum Aussortieren des Halbzeugs H ausgegeben. Durch die Ausgabe dieses Signals S_{EX} wird das Halbzeug H über die Handlingvorrichtung 3 in den Aussortier-Bereich EX bewegt und dort abgelegt. Liegt der Umriss U dagegen innerhalb des Umriss-Referenzbereichs R, wird ein Signal S_{OK} zum Bereitstellen des Halbzeugs H für ein Formgebungsverfahren ausgegeben. Durch die Ausgabe dieses Signal S_{OK} kann das Halbzeug H über die Handlingvorrichtung 3 in einen Bereitstellungs-Bereich OK bzw. direkt zu einem Ablagetisch 6 bewegt und dort abgelegt werden.

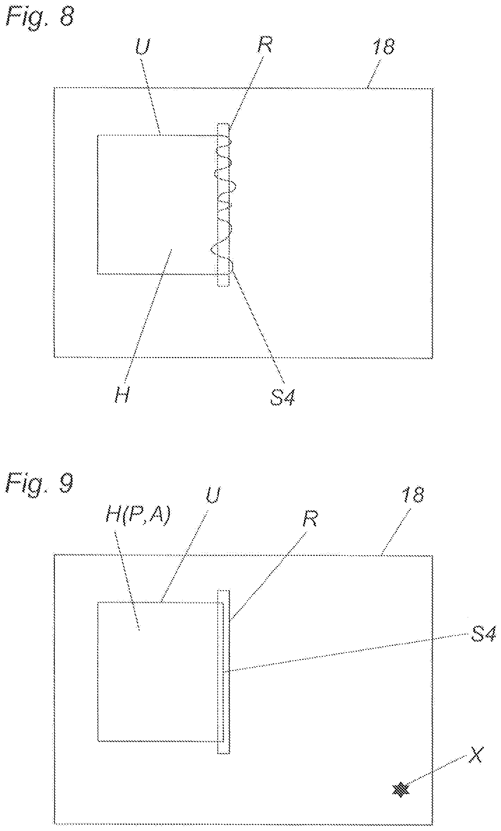

In Fig. 8 ist schematisch ein Aufnahmebereich 18 der Erfassungsvorrichtung 2 dargestellt. Nachdem das flächige Halbzeug H in diesen Aufnahmebereich 18 bewegt wurde, wird über das Aufnahmegerät 17 der Umriss U dieses Halbzeugs H zumindest bereichsweise mit dem Referenzbereich R verglichen. Aus dieser Fig. 8 geht schematisch hervor, dass die rechte Seiten- bzw. Legekante (entspricht der seitlichen Kante S4) des Umrisses U zumindest teilweise außerhalb des (von einem Bediener frei wählbaren) Referenzbereichs R liegt. Dieser Referenzbereich R kann auch als Toleranzfeld bezeichnet werden.

In Fig. 9 ist dagegen ein Fall dargestellt, in welchem die rechte Seitenkante des Umrisses gänzlich innerhalb des Referenzbereichs R liegt. Ein derart geformtes Halbzeug H kann also weiterverarbeitet werden. In Fig. 9 ist auch noch veranschaulicht, dass über die Erfassungsvorrichtung 2 auch die Position P und die Ausrichtung A des Halbzeugs H relativ zu einem am Aufnahmebereich 18 fixierten Referenzpunkt X erfasst wird. Entsprechende Signale können dann ebenfalls an die Steuer- oder Regeleinheit 8 übermittelt. In Abhängigkeit von diesen Signalen kann dann im Formgebungsverfahren das Halbzeug H entsprechend an einer Soll-Position P_{SOLL} positioniert werden.

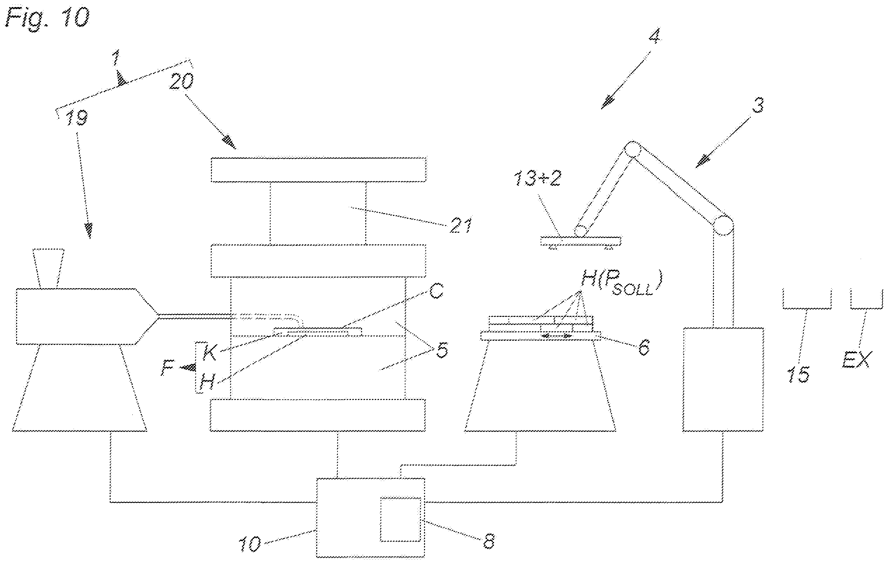

Anhand von Fig. 10 wird schließlich noch das Formgebungsverfahren und die Formgebungsanlage 4 schematisch veranschaulicht. Diese Formgebungsanlage 4 weist die Formgebungsmaschine 1 und zumindest die Vorrichtung 7 zum Anordnen von Halbzeugen H für ein Formgebungsverfahren auf. Die Formgebungsmaschine 1 weist die Einspritzeinheit 19 zum Einspritzen von flüssigen Formgebungsmaterial K und die Schließeinheit 20 auf. An den über die Antriebsvorrichtung 21 relativ zueinander bewegbaren Formaufspannplatten der Schließeinheit 20 ist das Formgebungswerkzeug 5 aufgespannt. Zwischen den Formhälften des Formgebungswerkzeugs 5 ist in geschlossenem Zustand die Kavität C ausgebildet. Der Ablagetisch 6 bildet zusammen mit der Handlingvorrichtung 3 die Ablegevorrichtung. Der Ablagetisch 6 weist eine Platte auf, welche die Ablageoberfläche bildet. Auf den Ablagetisch 6 (oder gegebenenfalls auf eine direkt im Formgebungswerkzeug 5 ausgebildete Ablagefläche) wird von der Handlingvorrichtung 3 eine Vielzahl von Halbzeugen H abgelegt. Die Halbzeuge H werden dabei an einer, vorzugsweise gespeicherten oder von der Anlagensteuerung 10 ermittelten, Soll-Position P_{SOLL} positioniert. Durch eine nicht dargestellte Unterdruck-Erzeugungsvorrichtung können die abgelegten Halbzeuge H, vorzugsweise vollflächig, an der Platte des Ablagetisches 6 gehalten werden. Die Halbzeuge H werden dann - zum Beispiel mitsamt dem in Form eines Schiebetisches ausgebildeten Ablagetisch 6 oder als Halbzeug-Cluster (wenn die einzelnen Halbzeuge H beim Ablegen bereits miteinander z. B. durch Kleben verbunden wurden) - in das Formgebungswerkzeug 5 bewegt, wodurch sich die Halbzeuge H in der Kavität C befinden. Nach dem Schließen des Formgebungswerkzeugs 5 wird flüssiges Formgebungsmaterial K (insbesondere Kunststoffschmelze) in die Kavität C eingebracht. Durch entsprechende Druckaufbringung über die Schließeinheit 20 erfolgt das Konsolidieren des Formgebungsmaterials K mit dem Halbzeug H zum Formteil F. Durch eine Kühlung kann das Aushärten noch beschleunigt werden. Nach dem Öffnen des Formgebungswerkzeugs 5 kann dann das Formteil F von der Handlingvorrichtung 3 (oder über einen Ausstoßer) entnommen werden. In diesem schematischen Beispiel gemäß Fig. 10 ist die Steuer- oder Regeleinheit 8 der Vorrichtung 7 integraler Bestandteil der Anlagensteuerung 10. Mit dieser Anlagensteuerung 10 werden alle wesentlichen Komponenten der Formgebungsanlage 4 zentral gesteuert bzw. geregelt.

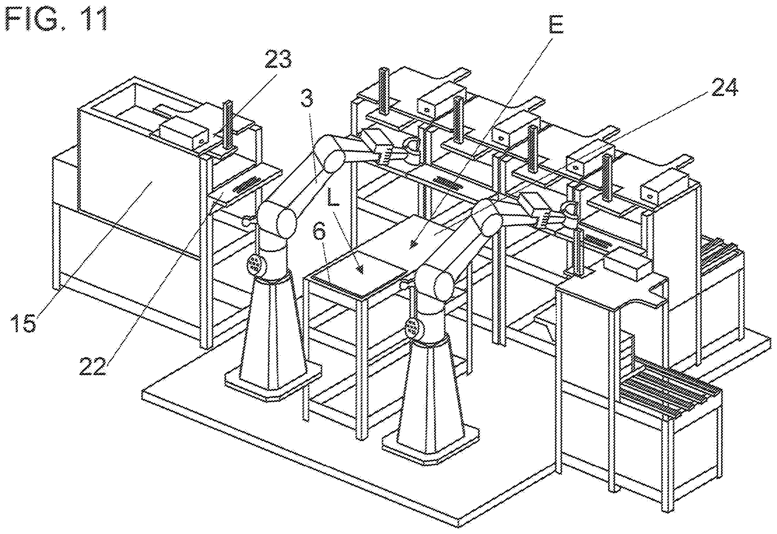

Mit Verweis auf Fig. 11 wird vor allem der Schritt des Erfassens des (Teil-)Umrisses U des Halbzeugs H verdeutlicht:
Fig. 11 zeigt ein Halbzeugmagazin 15, in welchem eine Vielzahl von (schon zugeschnittenen) Halbzeugen H gelagert ist. Es ist grundsätzlich möglich, dass sich die Handlingvorrichtung 3 der Ablegevorrichtung jedes Halbzeug H direkt aus dem Halbzeugmagazin 15 holt. Für einen schnelleren Ablauf ist allerdings vorgesehen, dass dieses Halbzeugmagazin 15 eine Vereinzelungsvorrichtung 23 aufweist, mit welcher einzelne Halbzeuge H aus den Magazinfächern geholt und auf der Abholoberfläche des Abholtischs 22 zum Abholen bereitgestellt werden.

Anschließend wird das auf dem Abholtisch 22 bereitgestellte Halbzeug H vom Übernahmekopf 13 der Handlingvorrichtung 3 aufgenommen und zur Erfassungsvorrichtung 2 transportiert. Das Halbzeug H ist zu diesem Zeitpunkt nur sehr grob zentriert, sodass die Aufnahmeposition des Halbzeugs H (Tapes) am Übernahmekopf 13 leicht variieren kann.

Die Erfassungsvorrichtung 2 weist eine Erfassungsoberfläche E auf. Diese Erfassungsoberfläche E ist in diesem Fall auf einer transparenten Platte 24 ausgebildet. Unterhalb der transparenten Platte 24 ist ein (hier nicht ersichtliches) Aufnahmegerät 17 in Form einer auf die transparente Platte 24 gerichteten Kamera eines optischen Messsystems angebracht. Die Erfassungsoberfläche E bildet zusammen mit der Kamera den sogenannten Kameratisch.

Da das Halbzeug H nur punktuell mittels Unterdruck am Übernahmekopf 13 gehalten wird, kann nicht sichergestellt werden, dass die wahren Abmessungen des Halbzeugs H am Übernahmekopf 13 gemessen werden. Um das Halbzeug H in eine gestreckte Position zu bringen, drückt sich der Übernahmekopf 13 gegen die Erfassungsoberfläche E. Somit kommt das Halbzeug H automatisch in eine gestreckte Position. Da die Erfassungsoberfläche E unbeweglich ist, ist in weiterer Folge auch der Abstand zwischen den Halbzeug H und dem optischen Messsystem definiert und festgelegt. Dadurch kann eine einfache und gleichbleibende Erfassung erfolgen, da die meisten optischen Messsysteme mit einer fixen Brennweite arbeiten.

Sobald das Halbzeug H die gestreckte Position erreicht hat, wird vom optischen Messsystem der Erfassungsvorrichtung 2 eine Aufnahme (Bild) vom Halbzeug H samt Übernahmekopf 13 durch die transparente Platte 24 hindurch gemacht. Um die genaue Lage des Halbzeugs H am Übernahmekopf 13 bestimmen zu können, befindet sich am Übernahmekopf 13 zumindest ein Referenzpunkt X. Von diesem zumindest einen Referenzpunkt X ist die genaue Lage bzw. auch die Größe bekannt. Somit ist es möglich, die genaue Lage und/oder Ausrichtung des Halbzeugs H in Bezug zu diesem Referenzpunkt X zu erfassen. Vor allem aber wird durch die Erfassungsvorrichtung 2 zumindest ein Teil eines Umrisses U des auf der Erfassungsoberfläche E angeordneten (und abzulegenden) Halbzeugs H erfasst. Dieser (Teil-)Umriss U wird in einem Speicher (oder in der Cloud) gespeichert, da dieser (Teil-)Umriss nach dem Ablegen eine Legekante für ein weiteres, benachbart abzulegendes Halbzeug H bildet.

Nachdem die genaue Position des Halbzeugs H am Übernahmekopf 13 der Handlingvorrichtung 3 bekannt ist, kann sich der Übernahmekopf 13 weiter in Richtung Ablageoberfläche L bewegen. Diese Ablageoberfläche ist auf einem Ablagetisch 6 ausgebildet. Da durch die Steuer- oder Regeleinheit 8 eine Soll-Position P_{SOLL} für das Halbzeug H und/oder für die Ablegevorrichtung unter Abgleich des zumindest einen Teils des Umrisses U mit einer an einem Untergrund auftretenden Legekante bestimmt worden ist, kann das Halbzeugs H durch die Ablegevorrichtung unter Verwendung der Soll-Position P_{SOLL} auf der Ablageoberfläche L abgelegt werden. Die Berechnung der genauen Position muss dabei nicht am Kameratisch erfolgen, sondern dies kann auch während der Roboterbewegung zwischen Kameratisch und Ablagetisch 6 erfolgen.

Hat der Übernahekopf 13 den Ablagetisch 6 erreicht, wird das Halbzeug H vom Ablagetisch 6 übernommen. Ist das gerade abgelegte Halbzeug H die erste Lage, welche abgelegt wird, so wird dieses Halbzeug H (vorzugsweise mittels Unterdruck) am Ablagetisch 6 fixiert. Zumindest ein Teil des gespeicherten Umrisses U dieses abgelegten Halbzeugs H bildet dann ein am Untergrund (Ablageoberfläche L) auftretende Legekante für ein weiteres abzulegendes Halbzeug H.

Nachdem das Halbzeug H abgelegt ist, geht der Prozess wieder von vorne los und der Übernahmekopf 13 holt sich das nächste Halbzeug H vom Halbzeugmagazin 15, bis das gesamte Halbzeug-Layup fertig gebaut ist. Die nächsten abgelegten Halbzeuge H werden dann zum Beispiel mittels mehrerer Schweißpunkte mit einem danebenliegenden und/oder darunterliegenden Halbzeug H, vorzugsweise stoffschlüssig, verbunden.

Aus Fig. 11 ist besonders gut ersichtlich, dass die Erfassungsoberfläche E der Erfassungsvorrichtung 2 separat zur Ablageoberfläche L der Ablegevorrichtung ausgebildet ist und beabstandet zur Ablageoberfläche L angeordnet ist. Dadurch kann die Umrisserfassung und das Ablegen voneinander entkoppelt werden. Dies ermöglicht auch eine besonders schnelle Herstellung eines Halbzeug-Layups, da zwei Handlingvorrichtung 3 versetzt zueinander an der Herstellung eines Halbzeugs-Layups arbeiten können. Das heißt, während eine Handlingvorrichtung 3 das Halbzeug H von der Erfassungsoberfläche E zur Ablageoberfläche L bewegt, kann die andere Handlingvorrichtung 3 bereits wieder ein Halbzeug H vom Abholtisch 22 zur Erfassungsoberfläche E bewegen.

### Bezugszeichenliste:

- 1: Formgebungsmaschine
- 2: Erfassungsvorrichtung
- 3: Handlingvorrichtung
- 4: Formgebungsanlage
- 5: Formgebungswerkzeug
- 6: Ablagetisch
- 7: Vorrichtung zum Vorbereiten von Halbzeugen
- 8: Steuer- oder Regeleinheit
- 9: Speicher
- 10: Anlagensteuerung
- 11: Sockel
- 12: Handlingarm
- 13: Übernahmekopf
- 14: Halteelemente
- 15: Halbzeugmagazin
- 16: Beleuchtungsvorrichtung
- 17: Aufnahmegerät
- 18: Aufnahmebereich
- 19: Einspritzeinheit
- 20: Schließeinheit
- 21: Antriebsvorrichtung
- 22: Abholtisch
- 23: Vereinzelungsvorrichtung
- 24: transparente Platte
- H: Halbzeug
- H1: erstes Halbzeug
- H2: zweites Halbzeug
- U: Umriss
- R: Umriss-Referenzbereich
- O1: Oberseite
- O2: Unterseite
- S1-S4: seitliche Kanten
- B: Erfassungs-Blickrichtung
- X: Referenzpunkt
- P: Position
- A: Ausrichtung
- V: Verstärkungsfasern
- F: Formteil
- C: Kavität
- K: flüssiges Formgebungsmaterial
- P_{SOLL}: Soll-Position
- EX: Aussortier-Bereich
- OK: Bereitstellungs-Bereich
- S_{EX}: Signal zum Aussortieren des Halbzeugs
- S_{OK}: Signal zum Bereitstellen des Halbzeugs
- V_{L}: Längsfasern
- V_{Q}: Querfasern
- E: Erfassungsoberfläche
- L: Ablageoberfläche

## Patentansprüche

1. Verfahren zum Anordnen von, insbesondere thermoplastischen, Halbzeugen (H), unter Verwendung einer elektronisch gesteuerten oder geregelten Ablegevorrichtung für die Halbzeuge (H), mit folgenden Schritten:
- Erfassen zumindest eines Teils eines Umrisses (U) eines abzulegenden Halbzeugs (H) durch eine Erfassungsvorrichtung (2),
- Bestimmen einer Soll-Position (P_{SOLL}) für das Halbzeug (H) und/oder für die Ablegevorrichtung zum Ablegen des Halbzeugs (H) unter Abgleich des zumindest einen Teils des Umrisses (U) mit einer an einem Untergrund auftretenden Legekante und
- Ablegen des Halbzeugs (H) durch die Ablegevorrichtung unter Verwendung der Soll-Position (P_{SOLL}), wobei die Erfassungsvorrichtung (2) ein optisches Messsystem aufweist, **dadurch gekennzeichnet, dass** das Halbzeug (H) bei der Erfassung zumindest eines Teils des Umrisses (U) gegen eine Erfassungsoberfläche (E) der Erfassungsvorrichtung (2) gedrückt wird, wobei die Erfassungsoberfläche (E) in Form einer für das optische Messsystem zumindest teilweise transparenten Platte ausgebildet ist.

2. Verfahren nach Anspruch 1, **dadurch gekennzeichnet, dass** die Soll-Position (P_{SOLL}) für das Halbzeug (H) und/oder für die Ablegevorrichtung zum Ablegen des Halbzeugs (H) so bestimmt wird, dass beim Ablegen des Halbzeugs (H) Spalten zwischen dem Halbzeug (H) und einem bereits davor abgelegten Halbzeug (H) und/oder ein Überlappen zwischen dem Halbzeug (H) und einem bereits davor abgelegten Halbzeug (H) vermieden werden.

3. Verfahren nach Anspruch 1 oder 2, **dadurch gekennzeichnet, dass** das Halbzeug (H) vor dem Erfassen zumindest eines Teils des Umrisses (U) durch die Ablegevorrichtung, vorzugsweise von einem Abholtisch (22) eines Halbzeugmagazins (15), aufgenommen wird.

4. Verfahren nach einem der Ansprüche 1 bis 3, **dadurch gekennzeichnet, dass** beim Erfassen zumindest eines Teils des Umrisses (U) des Halbzeugs (H) das Halbzeug (H)von der Ablegevorrichtung gehalten wird.

5. Verfahren nach einem der Ansprüche 1 bis 4, **dadurch gekennzeichnet, dass** ein Vergleich des erfassten Umrisses (U) mit einem gespeicherten Umriss-Referenzbereich (R) und/oder ein Vergleich eines aus dem erfassten Umriss (U) bestimmten Maßes des Halbzeugs (H) mit einem gespeicherten Referenzmaßbereich durchgeführt wird, wobei in Abhängigkeit eines Ergebnisses dieses Vergleichs entweder
- ein Aussortieren des Halbzeugs (H) erfolgt, wenn der erfasste Umriss (U) des Halbzeugs (H) zumindest abschnittsweise außerhalb des Umriss-Referenzbereichs (R) liegt bzw. das bestimmte Maß des Halbzeugs (H) außerhalb des Referenzmaßbereichs liegt,
oder
- das Halbzeug (H) zum Verwenden in einem Formgebungsverfahren bereitgestellt wird, wenn der erfasste Umriss (U) des Halbzeugs (H) innerhalb des Umriss-Referenzbereichs (R) liegt bzw. das bestimmte Maß des Halbzeugs (H) innerhalb des Referenzmaßbereichs liegt.

6. Verfahren nach einem der Ansprüche 1 bis 5, **dadurch gekennzeichnet, dass** ein Halbzeug (H) verwendet wird, das Verstärkungsfasern (V) aufweist, wobei von einer Erfassungsvorrichtung (2) der Verlauf der Verstärkungsfasern (V) erfasst wird und bei von der Erfassungsvorrichtung (2) erfassten zu großen Lücken zwischen den Verstärkungsfasern (V) das Halbzeug (H) aussortiert wird.

7. Verfahren nach einem der Ansprüche 1 bis 6, **dadurch gekennzeichnet, dass** eine Erfassungsvorrichtung (2) zur Erfassung des zumindest einen Teils des Umrisses (U) verwendet wird, wobei der Umriss (U) relativ zu zumindest einem, vorzugsweise an der Ablegevorrichtung ausgebildeten, Referenzmerkmal (X) erfasst wird.

8. Verfahren nach einem der Ansprüche 1 bis 7, **dadurch gekennzeichnet, dass** die Ablegevorrichtung eine, vorzugsweise auf einem Ablagetisch (6) ausgebildete, Ablageoberfläche (L) für das Halbzeug (H) aufweist, wobei die Ablageoberfläche (L) den Untergrund zum Ablegen des Halbzeugs (H) bildet.

9. Verfahren nach Anspruch 8, **dadurch gekennzeichnet, dass** die Erfassungsoberfläche (E) der Erfassungsvorrichtung (2) separat zur Ablageoberfläche (L) der Ablegevorrichtung ausgebildet ist und beabstandet zur Ablageoberfläche (L) angeordnet ist.

10. Formgebungsverfahren zum Herstellen eines Formteils (F) in einer Formgebungsanlage (4), wobei die Formgebungsanlage (4) eine Formgebungsmaschine (1), insbesondere eine Spritzgießmaschine, und eine Ablegevorrichtung aufweist, mit den Schritten:
- Durchführen eines Verfahrens nach einem der Ansprüche 1 bis 9,
- Einbringen zumindest eines für die Verwendung bereitgestellten Halbzeugs (H) in ein Formgebungswerkzeug (5) der Formgebungsmaschine (1),
- Schließen des Formgebungswerkzeugs (5), wodurch sich das zumindest eine Halbzeug (H) zumindest teilweise in einer Kavität (C) des Formgebungswerkzeugs (5) befindet,
- Einbringen eines flüssigen Formgebungsmaterials (K), insbesondere einer Kunststoffschmelze, in die Kavität (C),
- zumindest teilweises Aushärten des eingebrachten flüssigen Formgebungsmaterials (K) mitsamt dem zumindest einen Halbzeug (H) zum Formteil (F),
- Öffnen des Formgebungswerkzeugs (5) und
- Entnehmen des Formteils (F) aus dem Formgebungswerkzeug (5).

11. Vorrichtung (7) zum Anordnen von, insbesondere thermoplastischen, Halbzeugen (H), mit einer Ablegevorrichtung für die Halbzeuge (H), welche mittels einer elektronischen Steuer- oder Regeleinheit (8) steuerbar oder regelbar ist, und einer Erfassungsvorrichtung (2), welche zum Erfassen zumindest eines Teils eines Umrisses (U) eines abzulegenden Halbzeugs (H) ausgebildet ist, wobei die Steuer- oder Regeleinheit (8) dazu ausgebildet ist, eine Soll-Position (P_{SOLL}) für das Halbzeug (H) und/oder für die Ablegevorrichtung unter Abgleich des zumindest einen Teils des Umrisses (U) mit einer an einem Untergrund auftretenden Legekante zu bestimmen und beim Regeln oder Steuern der Vorrichtung (7) zum Ablegen des Halbzeugs (H) zu verwenden, wobei die Erfassungsvorrichtung (2) ein optisches Messsystem aufweist, **dadurch gekennzeichnet, dass** das Halbzeug (H) bei der Erfassung zumindest eines Teils des Umrisses (U) gegen eine Erfassungsoberfläche (E) der Erfassungsvorrichtung (2) gedrückt wird, wobei die Erfassungsoberfläche (E) in Form einer für das optische Messsystem zumindest teilweise transparenten Platte ausgebildet ist.

12. Vorrichtung nach Anspruch 11, **dadurch gekennzeichnet, dass** der Abgleich unter Minimierung von Spalten zwischen den Halbzeugen geschieht oder ein definiertes Spalt- oder Überlappungsmaß vorgesehen ist.

13. Vorrichtung nach Anspruch 11 oder 12, **dadurch gekennzeichnet, dass** an der Ablegevorrichtung ein Referenzmerkmal (X) vorgesehen ist, in Bezug auf welches der Umriss (U), die Position (P) und/oder Ausrichtung (A) des Halbzeugs (H) erfassbar bzw. bestimmbar ist.

14. Formgebungsanlage (4) zum Herstellen eines Formteils (F), mit einer Formgebungsmaschine (1), insbesondere einer Spritzgießmaschine, und einer Vorrichtung (7) nach einem der Ansprüche 11 bis 13.

15. Formgebungsanlage nach Anspruch 14, **gekennzeichnet durch** eine Anlagensteuerung (10), wobei die Steuer- oder Regeleinheit (8) der Vorrichtung (7) zum Anordnen von Halbzeugen (H) mit der Anlagensteuerung (10) signaltechnisch verbunden ist oder in die Anlagensteuerung (10) integriert ist.

## Claims

1. A method for arranging, in particular thermoplastic, semi-finished products (H) by using an electronically controlled or regulated placing device for the semi-finished products (H), comprising the following steps:
- detecting of at least one part of an outline (U) of a semi-finished product (H) to be placed, wherein the detecting is carried out by a detection device (2),
- determining a target position (PSOLL) for the semi-finished product (H) and/or for the placing device for placing the semi-finished product (H) by matching the at least one part of the outline (U) with a placing edge occurring on an underlying surface and
- placing the semi-finished product (H) by the placing device using the target position (PSOLL), wherein the detection device (2) comprises an optical measuring system,
**characterized in that** during the detection of at least one part of the outline (U), the semi-finished product (H) is pressed against a detection surface (E) formed as a plate, which plate is at least partially transparent for the optical measuring system of the detection device (2).

2. The method according to claim 1, **characterized in that** the target position (PSOLL) for the semi-finished product (H) and/or for the placing device for placing the semi-finished product (H) is determined in such a way that when placing the semi-finished product (H) gaps are prevented between the semi-finished product (H) and an already previously placed semi-finished product (H) and/or an overlapping is prevented between the semi-finished product (H) and an already previously placed semi-finished product (H).

3. The method according to claim 1 or 2, **characterized in that** prior to the detecting of the at least one part of the outline (U), the semi-finished product (H) is picked up by the placing device, preferably from a picking table (22) of a semi-finished products store (15).

4. The method according to one of the claims 1 to 3, **characterized in that** the semi-finished product (H) is held by the placing device when detecting the at least one part of the outline (U) of the semi-finished product (H).

5. The method according to one of the claims 1 to 4, **characterized in that** a comparison of the detected outline (U) with a saved outline reference range (R) and/or a comparison of a measurement of the semi-finished product (H) determined from the detected outline (U) with a saved reference measurement range is carried out, wherein depending on a result of this comparison either
- a sorting out of the semi-finished product (H) is carried out when the detected outline (U) of the semi-finished product (H) lies at least in sections beyond the outline reference range (R) or the measurement of the semi-finished product (H) lies beyond the reference measurement range,
or
- the semi-finished product (H) is made available for the use in a molding process when the determined outline (U) of the semi-finished product (H) lies within the outline reference range (R) or the determined measurement of the semi-finished product (H) lies within the reference measurement range.

6. The method according to one of the claims 1 to 5, **characterized in that** a semi-finished product (H) is used which comprises reinforcement fibers (V), wherein the running direction of the reinforcement fibers (V) is detected by the detection device (2), and the semi-finished product (H) is sorted out when the detection device (2) detects that the gaps between the reinforcement fibers (V) are too large.

7. The method according to one of the claims 1 to 6, **characterized in that** a detection device (2) for detecting the at least one part of the outline (U) is used, wherein the outline (U) is detected relative to at least one reference mark (X), preferably formed on the placing device.

8. The method according to one of the claims 1 to 7, **characterized in that** the placing device comprises a placing surface (L) - preferably formed on a placing table (6) - for the semi-finished product, wherein the placing surface (L) forms the underlying surface for placing the semi-finished product (H).

9. The method according to claim 8, **characterized in that** the detection surface (E) of the detection device (2) is formed separate from the placing surface (L) of the placing device and is arranged distanced to the placing surface (L).

10. A molding process for the production of a molding part (F) in a molding installation (4), wherein the molding installation (4) comprises a molding machine (1), in particular an injection molding machine, and a placing device, comprising the steps:
- carrying out a method according to one of the claims 1 to 9,
- inserting at least one semi-finished product (H), which has been made available for use, into a molding tool (5) of the molding machine (1),
- closing the molding tool (5), whereby the at least one semi-finished product (H) is at least partially situated in a cavity (C) of the molding tool (5),
- introducing a liquid molding material (K), in particular a plastic melt, into the cavity (C),
- at least partially hardening of the introduced liquid molding material (K) together with the at least one semi-finished product (H) to form the molding part (F),
- opening of the molding tool (5) and
- removing the molding part (F) from the molding tool (F).

11. A device (7) for arranging, in particular thermoplastic, semi-finished products (H), comprising a placing device for the semi-finished products (H), which can be controlled or regulated by an electronic controlling or regulating unit (8), and a detection device (2), which is configured to detect at least one part of an outline (U) of a semi-finished product (H) to be placed, wherein the controlling or regulating unit (8) is configured to determine a target position (PSOLL) for the semi-finished product (H) and/or for the placing device by matching the at least one part of the outline (U) with a placing edge occurring on an underlying surface and to use the target position (PSOLL) when controlling or regulating the device (7) for placing the semi-finished product (H), wherein the detection device (2) comprises an optical measuring system, **characterized in that** during the detection of at least one part of the outline (U), the semi-finished product (H) is pressed against a detection surface (E) formed as a plate, which plate is at least partially transparent for the optical measuring system of the detection device (2).

12. The device according to claim 11, **characterized in that** the matching can be carried out by minimizing the gaps between the semi-finished products or a defined extent of a gap or of an overlap can be provided.

13. The device according to claims 11 or 12, **characterized in that** a reference mark (X) is provided on the placing device, wherein the outline (U), the position (P) and/or the orientation (A) of the semi-finished product (H) can be detected or can be determined relative to the reference mark (X).

14. A molding installation (4) for producing a molding part (F), comprising a molding machine (1), in particular an injection molding machine, and a device (7) according to one of the claims 11 to 13.

15. The molding installation according to claim 14, **characterized by** an installation control unit (10), wherein the controlling or regulating unit (8) of the device (7) for arranging semi-finished products (H) is connected by signaling technique with the installation control unit (10) or is integrated into the installation control unit (10).

## Revendications

1. Procédé d'agencement de demi-produits, notamment thermoplastiques (H), en utilisant un dispositif de pose commandé ou réglé électroniquement pour les demi-produits (H), comprenant les étapes suivantes :
- détection d'au moins une partie d'un contour (U) d'un demi-produit à poser (H) par un dispositif de détection (2),
- détermination d'une position de consigne (PSOLL) pour le demi-produit (H) et / ou pour le dispositif de pose destiné à poser le demi-produit (H) en alignant la au moins une partie du contour (U) avec une arête de pose présente sur un support et
- pose du demi-produit (H) par le dispositif de pose en utilisant la position de consigne (PSOLL), dans lequel le dispositif de détection (2) présente un système de mesure optique,
**caractérisé en ce que** le demi-produit (H), lors de la détection d'au moins une partie du contour (U) est pressé contre une surface de détection (E) du dispositif de détection (2), dans lequel la surface de détection (E) est conçue en forme de plaque au moins partiellement transparente pour le système de mesure optique.

2. Procédé selon la revendication 1, **caractérisé en ce que** la position de consigne (PSOLL) pour le demi-produit (H) et / ou pour le dispositif de pose destiné à poser le demi-produit (H) est déterminée de manière à éviter, lors de la pose du demi-produit (H), des interstices entre le demi-produit (H) et un demi-produit déjà posé auparavant (H) et / ou un chevauchement entre le demi-produit (H) et un demi-produit déjà posé auparavant (H).

3. Procédé selon la revendication 1 ou 2, **caractérisé en ce que** le demi-produit (H), avant la détection d'au moins une partie du contour (U) par le dispositif de pose, est reçu de préférence par une table de collecte (22) d'un chargeur de demi-produits (15).

4. Procédé selon l'une des revendications 1 à 3, **caractérisé en ce que** lors de la détection d'au moins une partie du contour (U) du demi-produit (H), le demi-produit (H) est maintenu par le dispositif de pose.

5. Procédé selon l'une des revendications 1 à 4, **caractérisé en ce qu'**une comparaison du contour détecté (U) avec une zone de référence de contour enregistrée (R) et / ou une comparaison d'une mesure du demi-produit (H) déterminée à partir du contour détecté (U) avec une zone de mesure enregistrée est réalisée, dans lequel en fonction d'un résultat de cette comparaison soit
- un tri du demi-produit (H) a lieu lorsque le contour détecté (U) du demi-produit (H) se situe au moins par sections à l'extérieur de la zone de référence de contour (R) ou que la mesure déterminée du demi-produit (H) se situe à l'extérieur de la zone de mesure de référence,
ou
- le demi-produit (H) est mis à disposition pour utilisation dans un procédé de façonnage lorsque le contour détecté (U) du demi-produit (H) se situe à l'intérieur de la zone de référence de contour (R) ou que la mesure déterminée du demi-produit (H) se trouve à l'intérieur de la zone de mesure de référence.

6. Procédé selon l'une des revendications 1 à 5, **caractérisé en ce qu'**un demi-produit (H) est utilisé qui présente des fibres de renforcement (V), dans lequel le tracé des fibres de renforcement (V) est détecté par un dispositif de détection (2) et en cas de trop grands intervalles, détectés par le dispositif de détection (2), entre les fibres de renforcement (V), le demi-produit (H) est extrait.

7. Procédé selon l'une des revendications 1 à 6, **caractérisé en ce qu'**un dispositif de détection (2) pour détecter la au moins une partie du contour (U) est utilisé, dans lequel le contour (U) est détecté par rapport à au moins une caractéristique de référence (X) conçue, de préférence, sur le dispositif de pose.

8. Procédé selon l'une des revendications 1 à 7, **caractérisé en ce que** le dispositif de pose présente une surface de pose (L) pour le demi-produit (H), conçue de préférence sur une table de collecte (6), dans lequel la surface de pose (L) forme le support pour poser le demi-produit (H).

9. Procédé selon la revendication 8, **caractérisé en ce que** la surface de détection (E) du dispositif de détection (2) est conçue séparément de la surface de pose (L) du dispositif de pose et est disposée à une certaine distance de la surface de pose (L).

10. Procédé de façonnage pour fabriquer un élément moulé (F) dans une installation de façonnage (4), dans lequel l'installation de façonnage (4) présente une machine de façonnage (1), plus particulièrement une machine de moulage par injection, et un dispositif de pose, comportant les étapes :
- d'exécution d'un procédé selon l'une des revendications 1 à 9,
- de mise en place d'au moins un demi-produit (H), mis à disposition pour l'utilisation, dans un outil de façonnage (5) de la machine de façonnage (1),
- de fermeture de l'outil de façonnage (5), ce par quoi le au moins un demi-produit (H) se trouve au moins partiellement dans une cavité (C) de l'outil de façonnage (5),
- d'introduction d'un matériau de façonnage liquide (K), plus particulièrement d'une matière plastique en fusion, dans la cavité (C),
- de durcissement au moins partiel du matériau de façonnage liquide introduit (K) avec le au moins un demi-produit (H) pour former l'élément moulé (F),
- d'ouverture de l'outil de façonnage (5) et
- de retrait de l'élément moulé (F) de l'outil de façonnage (5).

11. Dispositif (7) d'agencement de demi-produits, notamment thermoplastiques (H), avec un dispositif de pose pour les demi-produits (H) lequel peut être commandé ou réglé à l'aide d'une unité de commande ou de réglage électronique (8), et un dispositif de détection (2), lequel est conçu pour détecter au moins une partie d'un contour (U) d'un demi-produit à poser (H), dans lequel l'unité de commande ou de réglage électronique (8) est conçue pour déterminer une position de consigne (PSOLL) pour le demi-produit (H) et / ou pour le dispositif de pose en alignant la au moins une partie du contour (U) avec une arête de pose présente sur un support et lors du réglage ou de la commande du dispositif (7) pour poser le demi-produit (H) à utiliser, dans lequel le dispositif de détection (2) présente un système de mesure optique, **caractérisé en ce que** le demi-produit (H) lors de la détection d'au moins une partie du contour (U) est pressé contre une surface de détection (E) du dispositif de détection (2), dans lequel la surface de détection (E) est conçue en forme d'une plaque au moins partiellement transparente pour le système de mesure optique.

12. Dispositif selon la revendication 11, **caractérisé en ce que** l'alignement se fait en minimisant les interstices entre les demi-produits ou **en ce qu'**une dimension définie d'interstice ou de chevauchement est prévue.

13. Dispositif selon la revendication 11 ou 12, **caractérisé en ce que** sur le dispositif de pose est prévue une caractéristique de référence (X) par rapport à laquelle il est possible de détecter ou de déterminer le contour (U), la position (P) et / ou l'orientation (A) du demi-produit (H).

14. Installation de façonnage (4) pour fabriquer un élément moulé (F), avec une machine de façonnage (1), plus particulièrement une machine de moulage par injection, et un dispositif (7) selon l'une des revendications 11 à 13.

15. Installation de façonnage selon la revendication 14, **caractérisée par** une commande de l'installation (10), dans laquelle l'unité de commande ou de réglage (8) du dispositif (7) pour l'agencement de demi-produits (H) est reliée en termes de technique des signaux à la commande de l'installation (10) ou est intégrée à la commande de l'installation (10).
